# EUROPÄISCHE PATENTANMELDUNG

(11) **EP 2 105 283 A2**
(43) Veröffentlichungstag der Anmeldung: **30.09.2009**
(21) Anmeldenummer: 09155493.1
(22) Anmeldetag: 18.03.2009
(51) Int. Cl.: B29C 65/82

(54) **Verfahren zur Qualitätsprüfung einer Schweißnaht von im Überlappstoß geschweißten Kunststoffbauteilen**

(30) Priorität: 25.03.2008 DE 102008016019
(71) Anmelder: JENOPTIK Automatisierungstechnik GmbH, 07745 Jena (DE); Johnson Controls Interiors GmbH & Co. KG, 47929 Grefrath (DE)
(72) Erfinder: Krug, Michael, 07747 Jena (DE); Feistel, Ulf, 07646 Laasdorf (DE); Harnisch, Hartmut, 47929 Grefrath (DE)
(74) Vertreter: Schaller, Renate

(57) **Zusammenfassung**

Die Erfindung betrifft ein Verfahren zur Qualitätskontrolle einer bevorzugt durch Lasertransmissionsschweißen gebildeten Schweißnaht.

Eine Prüfstrahlung, die bevorzugt gleich der Bearbeitungsstrahlung ist, wird in Form von Einzelpulsen entlang der Schweißnaht auf zueinander beabstandete Prüfstellen gerichtet. Die dadurch bewirkte Wärmestrahlung an den Prüfstellen wird erfasst und die daraus ableitbare Temperatur wird als Kriterium für die Qualität der Schweißnaht an den Prüfstellen verwendet.

## Beschreibung

Die Erfindung betrifft ein Verfahren, mit dem die Qualität, insbesondere die lokale Dichtheit von Schweißnähten zerstörungsfrei geprüft werden kann, insbesondere von solchen, die durch Lasertransmissionsschweißen hergestellt wurden. Ein derartiges gattungsgemäßes Verfahren ist aus der DE 101 51 345 A1 bekannt.

Das Prinzip des Kunststoffschweißens basiert auf dem Aufschmelzen der Kunststoffbauteile (nachfolgend Fügepartner genannt) an ihren Fügeflächen durch Wärmezufuhr bei gleichzeitigem oder anschließendem Zusammenfügen unter Druck. Die verschiedenen Technologien des Kunststoffschweißens können nach dem physikalischen Prinzip des Wärmeeintrages unterschieden werden. Zur Herstellung von Schweißnähten im Überlappstoß werden von den möglichen Technologien das Ultraschallschweißen, das Vibrationsschweißen und das Schweißen mit elektromagnetischer Strahlung angewandt.

Einen Spezialfall des Schweißens mit elektromagnetischer Strahlung stellt das Lasertransmissionsschweißen dar. Hierbei müssen die beiden Fügepartner zum einen aus einem für die Bearbeitungsstrahlung im Wesentlichen transparenten und zum anderen aus einem für die Bearbeitungsstrahlung im Wesentlichen absorbierenden Material bestehen. Die Laserstrahlung wird durch den transparenten, ersten Fügepartner auf die aneinanderliegenden Fügeflächen gerichtet, wo sie vom absorbierenden, zweiten Fügepartner absorbiert wird und zu dessen unmittelbarer Temperaturerhöhung führt. In Abhängigkeit davon, ob und wenn ja wie breit ein Luftspalt zwischen den Fügeflächen vorhanden ist, wird auch der transparente Fügepartner über die Fügefläche durch Wärmeleitung und Wärmestrahlung erwärmt. Das Ziel ist, beide Fügepartner im Bereich der Fügeflächen auf ihre Schmelztemperatur zu erwärmen, um sie, eine Schmelzelinse bildend, durch Verschweißung stoffschlüssig miteinander zu verbinden. Die Eindringtiefe der Laserstrahlung in den absorbierenden Fügepartner und die Wärmeleiteigenschaften des Materials der beiden Fügepartner bestimmen das Schmelzevolumen. Diese Wärmeeinflusszone ist beim Schweißen mittels Laser im Vergleich zu anderen Schweißverfahren aufgrund des eng fokussierten Energieeintrages gering.

Durch eine Relativbewegung zwischen der Laserstrahlung und dem durch die beiden Fügepartner gebildeten Werkstück wird eine Schweißnaht erzeugt. Voraussetzung für das Entstehen einer durchgehenden, geschlossenen und mediendichten Schweißnaht beim Kunststoffschweißen ist insbesondere, dass die Fügepartner über die Länge der Schweißnaht spaltfrei aneinander liegen.
Beim Lasertransmissionsschweißen wird bei Vorhandensein eines Luftspaltes zum einen die Erwärmung des transparenten Fügepartners verlangsamt, da diese nicht durch Wärmleitung, sondern durch Wärmestrahlung erfolgt und zum anderen muss der Spalt durch das Schmelzevolumen überbrückt werden. Eine Schmelzelinse, die Schmelzevolumina beider Fügepartner umfasst, bildet sich dann nicht oder nur unvollständig aus. Unabhängig von einem möglicherweise vorhandenen Spalt beim Schweißen, kann die Qualität der Schweißnaht durch Schwankungen von Prozess- oder Materialparametern negativ beeinflusst sein.

Unter Qualität der Schweißnaht kann z. B. verstanden werden:
- eine durchgehend dichte Schweißnaht, d. h. eine Schweißnaht, in der über die gesamte Länge eine ununterbrochene Schmelzelinse ausgebildet ist,
- eine durchgehend dichte Schweißnaht, bei der über die gesamte Länge eine ununterbrochene Schmelzelinse mit einer Mindestgröße über den Querschnitt, um eine vorgegebene Festigkeit für die Schweißverbindung zu erreichen,
- eine unterbrochene Schweißnaht, in der in vorgegebenen Abständen Schmelzelinsen ausgebildet sind,
- eine Schweißnaht, unterbrochen oder durchgehend, die eine vorgegebene oder gleichmäßige Breite aufweist, um ästhetischen Ansprüchen zu genügen.

Aus den praktisch nicht sicher vermeidbaren Parameterschwankungen beim Kunststoffschweißen ergibt sich die Notwendigkeit, die Schweißnaht einer Qualitätskontrolle zu unterziehen.

Eine Methode zur zerstörungsfreien Kontrolle ist aus der DE 101 51 345 A1 bekannt, bei der mit einem so genannten Reflexionsdiagnostikverfahren eine an der Schweißnaht reflektierte Strahlung detektiert wird.
Die Fügepartner werden mit einer Strahlung einer Wellenlänge bestrahlt, für die der Kunststoff eine ausreichende Transmission aufweist. Ein Teil der Strahlung wird bereits an der ersten Oberfläche des in Strahlungsrichtung ersten Fügepartners reflektiert. Ein weiterer Teil wird bis zur Fügestelle transmittiert und dort reflektiert. Der Anteil der hier reflektierten Strahlung unterscheidet sich je nachdem, ob an der Fügestelle das Material des ersten Fügepartners unmittelbar an das Material des zweiten Fügepartners oder aber an Luft im Falle des Vorhandenseins eines Spaltes angrenzt.
Durch Detektion der Gesamtreflexion kann eine Aussage über das Vorhandensein eines Spaltes getroffen werden.

Zur Durchführung des Reflexionsdiagnoseverfahrens gemäß der DE 101 51 345 A1 wird eine Vorrichtung verwendet mit einer Laserstrahlquelle, die einen Diagnosestrahl emittiert, einer Fokussieroptik, mit der der Diagnosestrahl auf die Ebene der Schweißnaht scharf abgebildet wird, und einer CCD-Kamera zur Erfassung der reflektierten Strahlung, mit einer vorgeschalteten Abbildungsoptik, sowie Mittel zur Verschiebung der Vorrichtung entlang der Schweißnaht.

Auch in der DE 101 58 095 A1 ist ein Verfahren beschrieben, mit dem die an den Materialübergängen in einem geschweißten Kunststoffbauteil reflektierte Strahlung zur Qualitätskontrolle erfasst und ausgewertet wird. Eine hier ebenfalls offenbarte Vorrichtung zur Durchführung des Verfahrens erlaubt die Kontrolle auch während des Schweißprozesses, indem eine Kontrollstrahlung der Bearbeitungsstrahlung folgend auf die bereits verfestigte Schweißnaht gerichtet wird.
In der DE 101 58 095 A1 wird von einem Stand der Technik ausgegangen, bei dem die Schweißnaht während des Schweißprozesses pyrometrisch kontrolliert wird, indem die von der Schweißnaht ausgehende Wärmestrahlung detektiert wird. Als nachteilig wird angesehen, dass ein solches Kontrollverfahren auf die beim Schweißprozess entstehende Wärmestrahlung angewiesen ist, nicht beim Simultanschweißen anwendbar ist und grundsätzlich fehlerhaft sei.

Tatsächlich handelt es sich bei dem hier dargestellten Stand der Technik nicht um ein Verfahren zur Qualitätskontrolle einer Schweißnaht, sondern die bewirkte Wärmestrahlung wird detektiert, um den Messwert als Regelgröße für die Verfahrensparameter, insbesondere die Laserleistung zu verwenden, mit dem Ziel, eine Schweißnaht hoher Qualität herzustellen.

Der Erfindung liegt die Aufgabe zu Grunde, ein anderes als ein optisches Verfahren zur Qualitätskontrolle einer Schweißverbindung zu schaffen, mit dem insbesondere Kunststoffbauteile, die im Lasertransmissionsschweißen verschweißt wurden, mit einem geringen gerätetechnischen Mehraufwand geprüft werden können.

Diese Aufgabe wird durch ein Verfahren mit den Merkmalen des Anspruches 1 gelöst.
Vorteilhafte Weiterbildungen sind in den Unteransprüchen beschrieben.

Im Unterschied zu den aus dem Stand der Technik bekannten optischen Prüfverfahren dient bei dem erfindungsgemäßen Verfahren eine Wärmestrahlung als Messstrahlung, das heißt, dass nicht nur eine beim Lasertransmissionsschweißen bereits verwendete Strahlungsquelle auch für die Prüfung verwendet werden kann, sondern auch ein hierbei üblicherweise zur Prozessreglung verwendetes Pyrometer als Messsensor Anwendung finden kann.

Für die Prüfung von Schweißnähten, die im Lasertransmissionsschweißen hergestellt wurden, kann demnach im Wesentlichen die hierbei eingesetzte Schweißvorrichtung verwendet werden. Es bedarf lediglich einer zusätzlichen Speicher- und Ausgabeeinheit, die die Messwerte sowie hierzu relevante Daten wie Messort und Werkstücknummer speichert, und als Messprotokoll in Form eines Diagramms, einer Tabelle oder eines Datensatzes ausgibt.

Für das erfindungsgemäße Prüfverfahren ist es erfindungswesentlich, dass entlang der Schweißnaht einzelne Prüfstellen des Werkstückes mit einer Strahlungsenergie definierter Energiemenge beaufschlagt und die dadurch verursachten Temperaturen bzw. Temperaturanstiege an den Prüfstellen über die Detektion der Wärmestrahlung erfasst werden.
Um die Strahlungsenergie in die Schweißnaht einzutragen, muss eine Strahlung (Prüfstrahlung) mit einer Wellenlänge in die Schweißnaht eingebracht werden, für die der erste Fügepartner in Strahlungsrichtung im Wesentlichen transparent und der zweite Fügepartner im Wesentlichen absorbierend ist.

Für eine Schweißverbindung, die mittels Lasertransmissionsschweißen hergestellt wurde, bietet sich an, als Prüfstrahlung die Bearbeitungsstrahlung zu verwenden. Allerdings, im Unterschied zum Schweißprozess, bei dem die Energieeinbringung kontinuierlich erfolgt, muss die Prüfstrahlung eine gepulste Strahlung sein, um mittels Einzelpulsen eine definierte Energiemenge an einzelne voneinander beabstandete Prüfstellen einzubringen.
Als Antwort auf einen Strahlungspuls erfolgt eine Erwärmung, deren Temperaturverlauf mit einer charakteristischen Anstiegsflanke, Abfallflanke und Amplitude durch die lokale Dichtheit der Schweißverbindung an der betreffenden Prüfstelle bestimmt wird.

Ausgehend von der Prüfstelle, an welcher die Strahlungsenergie eingebracht wird, steigt die Temperatur in Abhängigkeit von der Geschwindigkeit der Wärmeverteilung auf einen maximalen Wert an, um dann ebenfalls abhängig von der Wärmeverteilung wieder abzusinken.
Das heißt, je schneller sich das erwärmte Volumen noch während des Energieeintrages vergrößert, desto geringer ist der Temperaturanstieg. Je schneller sich die Wärmeverteilung nach Abschluss des Energieeintrages fortsetzt, desto schneller ist auch der Temperaturabfall.
Wie bereits erläutert, ist die Art und Geschwindigkeit der Wärmeverteilung bestimmt durch die Verbindung der Fügepartner an der Prüfstelle.

Die erreichte Maximaltemperatur und auch der Temperaturverlauf sind daher charakteristisch dafür, ob und wenn ja wie groß ein Spalt an der Prüfstelle ist sowie, ob eine nur kleine oder größere Schmelzelinse an der Prüfstelle ausgebildet ist.

Die Strahlungsenergie wird unmittelbar am Materialübergang zwischen dem ersten und dem zweiten Fügepartner vom zweiten Fügepartner absorbiert. Der Querschnitt des Absorptionsvolumens wird durch den Strahlungsquerschnitt an den Fügeflächen bestimmt. Dieser Strahlungsquerschnitt darf nicht größer der Schweißnahtbreite sein und sollte so klein wie möglich sein, um durch ein möglichst kleines Absorptionsvolumen eine möglichst hohe Temperaturänderung zu erreichen, weshalb die Strahlung vorteilhaft auf die Oberfläche des absorbierenden Fügepartners fokussiert wird. Je höher die Temperaturänderung ist, desto besser ist das Signal-Rausch-Verhältnis.

Ist jedoch der Querschnitt des Absorptionsvolumens wesentlich kleiner, als die Breite der Schweißnaht ist, müsste theoretisch, bei Prüfung auf durchgehende Dichtheit, die Schweißnaht über ihre Breite mehrfach abgetastet werden, um zu prüfen, ob die Schweißnaht über ihre gesamte Breite geschlossen ist, d. h. es müssten mehrere Messumläufe entlang zueinander über die Breite der Schweißnaht versetzten Prüflinien durchgeführt werden.

Um diesen Mehraufwand zu vermeiden, wird die Schweißnaht nicht entlang ihrer Mittellinie geprüft, sondern entlang einer hierzu um einen Abstand versetzten parallelen Prüflinie. Sofern die Prüfstellen auf dieser versetzten Prüflinie als gut festgestellt werden, kann man mit hoher Wahrscheinlichkeit darauf schließen, dass auch solche entlang der Mittellinie als gut bewertet werden können.

Von dem Absorptionsvolumen ausgehend, wird die Wärme sofort, d. h. auch noch während des Energieeintrages verteilt, weshalb selbst bei gleichem Absorptionsvolumen an den unterschiedlichen Prüfstellen nicht die gleiche maximale Temperatur erreicht wird, sondern der Anstieg geringer ist, je schneller die Wärme vom Absorptionsvolumen abgeführt wird, was z. B. bei einer größeren Schmelzelinse anders gegeben ist als bei einer kleineren Schmelzelinse, da eine stärkere Materialvermischung der beiden Fügepartner veränderte Wärmeleiteigenschaften bewirkt.

Vernachlässigt man die etwas geänderten Wärmeleiteigenschaften in der Schmelzelinse, so erfolgt innerhalb des zweiten Fügepartners, unabhängig von der Qualität der Schweißnaht, an jeder Prüfstelle eine gleich schnelle Wärmeleitung, abhängig vom Wärmeleitkoeffizient des Materials des zweiten Fügepartners.

Zum ersten Fügepartner hin wird sich die Wärme bei einer geschlossenen Schweißnaht an der Prüfstelle ebenfalls durch Wärmeleitung verteilen mit einer Geschwindigkeit abhängig vom Wärmeleitkoeffizienten des Materials des ersten Fügepartners. Ist jedoch die Schweißnaht an der betreffenden Prüfstelle nicht geschlossen, d. h. zwischen den Fügepartnern besteht ein Spalt, erfolgt die Wärmeverteilung in Richtung des ersten Fügepartners über Wärmestrahlung, womit eine Volumenerwärmung im ersten Fügepartner umso langsamer erfolgt, je breiter der Spalt ist.

Nach vollständigem Energieeintrag durch einen Strahlungspuls ist an einer Prüfstelle mit geschlossener Schweißnaht ein größeres Volumen erwärmt als an einer Prüfstelle mit offener Schweißnaht.

Die Relativgeschwindigkeit zwischen der Prüfstrahlung und dem aus den beiden Fügepartnern bestehenden Werkstück wird so gewählt, dass sich die jeweils benachbart beaufschlagten Prüfstellen entlang der Schweißnaht nicht überlappen und einen so großen Abstand zueinander haben, dass sie sich während der Temperaturmessung wärmetechnisch nicht beeinflussen, damit es zu keiner Verfälschung des Messsignals kommt.

Anhand der Zeichnung wird das Verfahren im Folgenden beispielhaft näher erläutert.

Es zeigen:
- Fig. 1: eine Kalibrierkurve eines Pyrometers mit zugeordneten Prinzipskizzen für Prüfstellen mit einem unterschiedlichen Spaltabstand
- Fig. 2: ein Temperatur-Zeit-Diagramm für verschiedene Prüfstellen
- Fig. 3: ein Temperatur-Weg-Diagramm für eine Schweißnaht

Das erfindungsgemäße Prüfverfahren ist ein Kontrollverfahren, welches nach der Fertigstellung der Schweißnaht durchgeführt wird. Es dient grundsätzlich der Qualitätskontrolle und nicht der Steuerung oder Reglung von Prozessgrößen während des Schweißens. Um unverfälschte Messergebnisse zu erhalten, die sichere Aussagen zur Qualität der Schweißnaht zulassen, müssen die Prüfstellen zu Beginn des Verfahrens ein gleichmäßiges Temperaturniveau aufweisen. Idealerweise ist das aus den beiden Fügepartnern bestehende Werkstück gleichmäßig erkaltet.
Das zur Erfassung der Wärmestrahlung und damit zur Temperaturmessung verwendete Pyrometer wird vor der Verfahrensdurchführung auf die zu prüfenden Werkstücke kalibriert, indem die beiden Fügepartner an Prüfstellen mit unterschiedlichen Spaltabständen zueinander mit der Prüfstrahlung beaufschlagt werden und der jeweilige Temperaturverlauf oder nur der jeweilige maximale Temperaturwert für die einzelnen Prüfstellen mit dem Pyrometer erfasst wird. Als Bewertungskriterien können Temperaturwerte, aber auch die Intergrale der Temperaturverläufe genutzt werden.

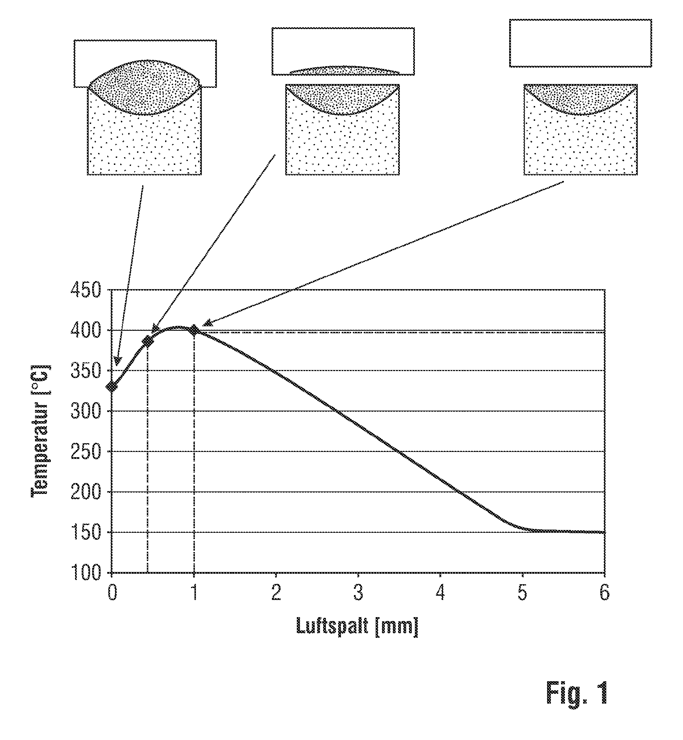

In Fig. 1 sind drei Prinzipskizzen für beispielhaft unterschiedliche Spaltabstände der Fügepartner dargestellt. Der jeweils hierzu gemessene maximale Temperaturwert, nach Eintrag eines Strahlungspulses von beispielsweise 0,5 s Pulslänge und 80 Watt Strahlungsleistung ist aus dem darunter gezeigten Diagramm in Abhängigkeit von der Größe des Luftspaltes zwischen den Fügepartnern dargestellt.

Beginnend mit einer Prüfstelle mit einem Spaltabstand gleich Null verringert sich das erwärmte Materialvolumen mit zunehmend größer werdendem Spaltabstand, weshalb die Temperatur zunächst ansteigt.
Ab einem gewissen Spaltabstand, hier beispielhaft 1 mm, bleibt dann die Temperatur konstant, wenn das Pyrometer auf die Fügefläche des zweiten Fügepartners gerichtet ist (Strichlinie), oder sie sinkt ab (Volllinie), wenn das Pyrometer auf die Fügefläche des ersten Fügepartners gerichtet ist.
Ab einem gewissen Spaltabstand, der wärmetechnisch quasi wie ein unendlicher Spaltabstand wirkt, hier beispielhaft 5 mm, bleibt dann die Temperatur konstant.
Diese erhöhte, jedoch konstante Temperatur, auch über eine weitere Spaltvergrößerung hinweg, ist durch eine nicht ganz zu vermeidende Strahlungsabsorption des transparenten Fügepartners und die Wärmeleitung in diesem über die Zeit des Prüfverfahrens zu erklären. Die Erwärmung durch die Wärmestrahlung des absorbierenden Fügepartner ist quasi Null.

Um nur eine Aussage zu erhalten, ob die Schweißnaht an der Prüfstelle dicht ist oder nicht, kommt es in der Regel nicht darauf an, die Größe des Spaltabstandes festzustellen. Die Möglichkeit, aus den Messwerten auch auf den Spaltabstand zu schließen, ist jedoch mit dem erfindungsgemäßen Verfahren, im Unterschied zu den aus dem Stand der Technik bekannten optischen Verfahren, prinzipiell gegeben.

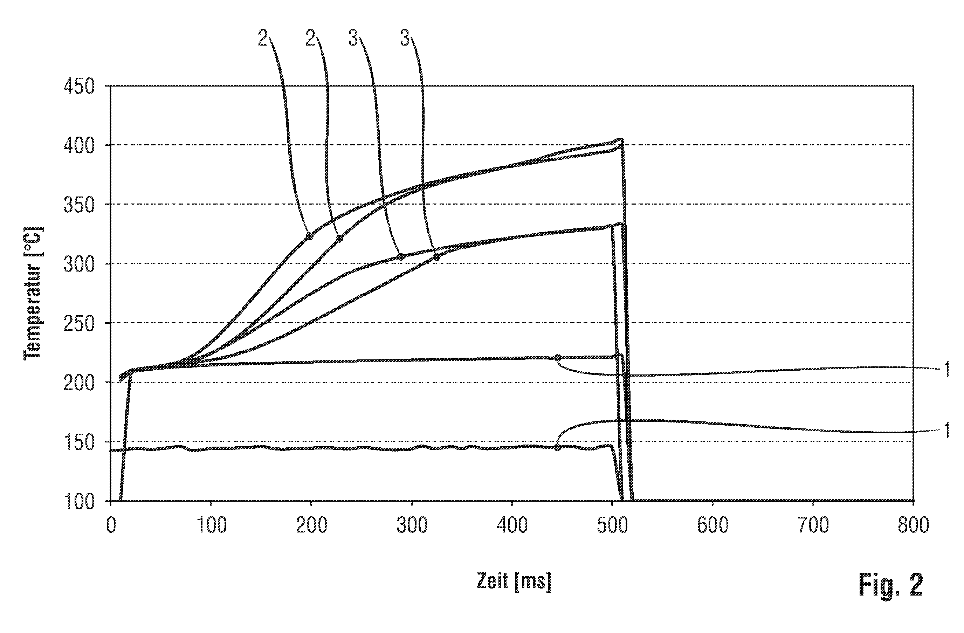

In Fig. 2 ist der Temperaturanstieg des Temperaturverlaufes für Beispiele von Prüfstellen unterschiedlicher Spaltabstände gezeigt.
Die beiden Kurven 1 zeigen einen nahezu gleichbleibenden Temperaturwert, wie er gemessen wird, wenn der transparente Fügepartner mit einem quasi unendlichen Spaltabstand zum absorbierenden Fügepartner hin angeordnet ist. Sie unterscheiden sich in der Höhe der Temperaturwerte auf Grund unterschiedlicher Strahlungsleistung pro Strahlungspuls, die für die untere Kurve 1 gleich 40 Watt und die obere Kurve 1 gleich 80 Watt ist.
Die Kurven 2 wurden für eine Prüfstelle mit einem Spaltabstand Null und die Kurven 3 für eine Prüfstelle mit einem Spaltabstand von 1 mm aufgenommen, mit einer Strahlungsleistung von 80 Watt.

Die Energiemenge, die pro Strahlungspuls in das Werkstück eingebracht wird, muss so groß sein, dass die bewirkte Wärmestrahlung detektierbar ist. Sie kann auch so groß gewählt werden, dass an Prüfstellen, an denen ein nur kleiner Spalt vorhanden ist, das Absorptionsvolumen zum Schmelzen kommt und die Schweißnaht noch nachträglich geschlossen wird.

Die Relativgeschwindigkeit zwischen dem Prüfstrahl und dem Werkstück wird in Abhängigkeit von der Pulsfrequenz so gewählt, dass sich die Auftreffpunkte des Prüfstrahles und damit die Prüfstellen nicht überlappen.
Wenn keine durchgehende, sondern eine unterbrochene Schweißnaht geprüft werden soll, mit vorgegebenen Abständen für die Verbindungsstellen, werden auch die Prüfstellen so gesetzt, dass sie entsprechende Abstände zueinander aufweisen.

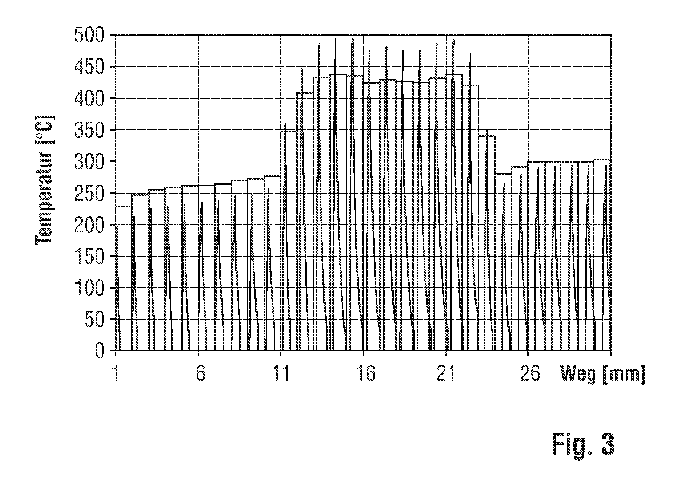

In Fig. 3 ist eine Temperaturkurve entlang einer Schweißnaht dargestellt. An Prüfstellen entlang einer Linie auf der Schweißnaht, im Abstand von hier beispielhaft 1 mm, wird die Schweißnaht mit gleichen Strahlungspulsen beaufschlagt (hier nicht dargestellt).

Die Strahlungspulse bewirken an den Prüfstellen über einen Schweißweg von 0 bis 10 mm und ab 23 mm jeweils einen maximalen Temperaturanstieg nicht über 300 °C, hingegen auf dem Schweißweg zwischen 11 mm und 22 mm einen maximalen Temperaturanstieg von über 400 °C. Allein aus den die maximale Temperatur wiederspiegelnden unterschiedlichen Amplituden kann auf Abschnitte einer geschlossenen Schweißnaht bzw. offene Schweißnahtstellen geschlossen werden.

Genauer werden die Messergebnisse, wenn anstelle oder auch zusätzlich zur Amplitude das Intergral unter der jeweils einer Prüfstelle zugeordneten Temperaturkurve zur Bewertung herangezogen wird, da auch die Anstiegsflanken und Abfallflanken für den Spaltabstand charakteristisch sind.

Die dargestellten Rechteckkurven an den Prüfstellen zeigen gewichtete Temperaturwerte, die aus den maximalen Temperaturwerten und den Temperaturverläufen an den Prüfstellen gebildet werden.

Eine Messkurve über alle Prüfstellen wird über die gesamte geprüfte Schweißnahtlänge aufgezeichnet und dient als Qualitätsbeleg für die Schweißnaht.

## Patentansprüche

1. Verfahren zur Qualitätsprüfung einer Schweißnaht von im Überlappstoß geschweißten Fügepartnern aus Kunststoff, bei dem eine Prüfstrahlung durch den ersten Fügepartner hindurch auf eine zwischen den Fügeflächen der beiden Fügepartner ausgebildete Schweißnaht gerichtet wird, **dadurch gekennzeichnet,**
**dass** die Prüfstrahlung in Form von Einzelpulsen vorgegebener Energiemenge entlang der Schweißnaht auf zueinander beabstandete Prüfstellen gerichtet wird und die bewirkte Wärmestrahlung detektiert wird, um aus der Temperatur an den Prüfstellen auf die Qualität der Schweißverbindung an den Prüfstellen zu schließen.

2. Verfahren nach Anspruch 1, **dadurch gekennzeichnet,**
**dass** unter der Temperatur ein maximaler Temperaturwert zu verstehen ist, der sich an einer Prüfstelle einstellt.

3. Verfahren nach Anspruch 1 oder 2, **dadurch gekennzeichnet,**
**dass** unter der Temperatur der Intergralwert des Temperaturverlaufes an einer Prüfstelle verstanden wird.

4. Verfahren nach Anspruch 1, **dadurch gekennzeichnet,**
**dass** die Prüfstrahlung gleich der Bearbeitungsstrahlung ist, mit der die Schweißverbindung hergestellt wurde.

5. Verfahren nach Anspruch 1, **dadurch gekennzeichnet,**
**dass** die Prüfstellen auf einer Linie angeordnet sind, die parallel zur Mittellinie der Schweißnaht verläuft.

6. Verfahren nach einem der Ansprüche 1-3, **dadurch gekennzeichnet,**
**dass** aus der Temperatur darauf geschlossen wird, ob die Schweißnaht an den Prüfstellen geschlossen oder geöffnet ist, das heißt ein Spalt zwischen den Fügepartnern vorhanden ist.

7. Verfahren nach einem der Ansprüche 1-3, **dadurch gekennzeichnet,**
**dass** aus der Temperatur darauf geschlossen wird, wie breit gegebenenfalls ein zwischen den Fügepartnern an den Prüfstellen vorhandener Spalt ist.
